# EUROPÄISCHE PATENTSCHRIFT

(11) **EP 2 742 272 B1**
(45) Veröffentlichungstag und Bekanntmachung des Hinweises auf die Patenterteilung: **20.04.2016**
(21) Anmeldenummer: 12745630.9
(22) Anmeldetag: 01.08.2012
(51) Int. Cl.: F17C 1/00

(54) **VORRICHTUNG ZUR SPEICHERUNG UND ABGABE VON FLÜSSIGEN UND/ODER GASFÖRMIGEN MEDIEN UNTER DRUCK SOWIE KRAFTSTOFFENERGIEUMWANDLUNGSVORRICHTUNG UND VERFAHREN ZUR MONTAGE EINER VORRICHTUNG ZUR SPEICHERUNG UND ABGABE VON FLÜSSIGEN UND/ODER GASFÖRMIGEN MEDIEN UNTER DRUCK**
DEVICE FOR STORING AND DISPENSING PRESSURIZED FLUID AND/OR GASEOUS MEDIA, FUEL ENERGY CONVERSION DEVICE, AND METHOD FOR ASSEMBLING A DEVICE FOR STORING AND DISPENSING PRESSURIZED FLUID AND/OR GASEOUS MEDIA
DISPOSITIF POUR L'ACCUMULATION ET LA DISTRIBUTION DE MILIEUX LIQUIDES ET/OU GAZEUX SOUS PRESSION, AINSI QUE DISPOSITIF DE TRANSFORMATION D'ÉNERGIE DE CARBURANT ET PROCÉDÉ POUR LE MONTAGE D'UN DISPOSITIF POUR L'ACCUMULATION ET LA DISTRIBUTION DE MILIEUX LIQUIDES ET/OU GAZEUX SOUS PRESSION

(30) Priorität: 08.08.2011 DE 102011052490; 21.03.2012 DE 202012101004 U
(43) Veröffentlichungstag der Anmeldung: 18.06.2014
(73) Patentinhaber: Rehau AG & Co, 95111 Rehau (DE)
(72) Erfinder: GRIEBEL, Dragan, 95173 Schönwald (DE); LANZL, Thomas, 95615 Marktredwitz (DE); OELSCHLEGEL, Alexander, 95176 Konradsreuth (DE); FRIEDERICH, Markus, 97241 Bergtheim (DE); HOFMANN, Franz, 95213 Münchberg (DE)
(86) Internationale Anmeldenummer: PCT/EP2012/003272
(87) Internationale Veröffentlichungsnummer: WO 2013/020668

(56) Entgegenhaltungen:
- EP-B1- 0 821 194
- EP-B1- 2 115 343
- WO-A1-2010/142303
- WO-A2-01/51844
- DE-A1- 1 501 728

## Beschreibung

Die Erfindung betrifft eine Vorrichtung zur Speicherung und Abgabe von flüssigen und/oder gasförmigen Medien unter Druck aufweisend einen das Medium aufnehmenden Medienbehälter aus Kunststoff, mindestens ein mit dem Medienbehälter verbundenes Ventilanschlusselement und mindestens ein mit dem Ventilanschlusselement verbindbares Ventilelement, wobei der Medienbehälter einen nach außen vorstehenden Kragen mit einer Kragenaußenwandung und einer Krangeninnenwandung aufweist. Das obere Ende des Kragens definiert dabei den freien Querschnitt einer Öffnung des Medienbehälters, wobei das Ventilanschlusselement im Bereich dieser Öffnung angeordnet und die Kragenaußenwandung von einer Innenwandung des Ventilanschlusselementes umschlossen ist.

Eine derartige Vorrichtung ist beispielsweise aus der EP 2 115 343 B1 bekannt. Hierbei durchdringt ein Abschnitt des Ventilelements die Öffnung und wird von der Krageninnenwandung umschlossen. Um zu verhindern, dass das flüssige und/oder gasförmige Medium unter Druck aus dem Inneren des Medienbehälters aus Kunststoff entweichen kann, ist hierbei vorgesehen, dass im Bereich dieses Abschnittes O-Ring Dichtungen zwischen diesem Abschnitt und der Krageninnenwandung vorgesehen sind. Aufgrund der Verformungseigenschaften der O-Ringe soll ein Austreten des Mediums dauerhaft verhindern werden. Nachteilig ist hierbei, dass aufgrund der Dimensionierung der O-Ringe diese nur in einem sehr geringen, kreisförmig umlaufenden Bereich eine Abdichtung zwischen dem Abschnitt des Ventilelements und der Krageninnenwandung erzielen. Dem Dokument ist daher zu entnehmen, dass zur Vergrößerung dieser Dichtfläche mindestens ein zweiter O-Ring erforderlich ist, um eine dauerhafte Mediendichtheit zu gewährleisten. Die O-Ringe dichten zudem gegenüber der Krageninnenwandung des Medienbehälters, so dass eine dauerhafte Dichtheit der O-Ringe gegenüber einem Kunststoffmaterial gewährleistet sein muss, dessen Langzeitverformungen mit hoher Wahrscheinlichkeit zu Undichtigkeiten führen.

Die Druckschrift EP 0 821 194 B1 schlägt demgegenüber vor, dass ein Klemmring in das Ventilaufnahmeelement einschraubbar ist, welcher in einen kegelstumpfartigen Abschnitt übergeht. Der letztgenannte kegelstumpfartige Abschnitt presst dann die Innenwandung des Halsstückes eines Medienbehälters, welche mit einer zum Abschnitt korrespondierenden Anschrägung versehen ist, gegen die Innenwandung des Ventilaufnahmeelements. Nachteilig ist hierbei, dass die Anschrägung des kegelstumpfartigen Abschnittes und die Anschrägung der Innenwandung des Kragens sehr exakt aufeinander abgestimmt sein müssen, um eine ausreichende Dichtheit dahingehend zu gewährleisten, dass das unter Druck stehende Medium nicht zwischen dem Klemmring und der Innenwandung des Ventilanschlusselementes und infolgedessen zwischen der Innenwandung des Ventilanschlusselementes und der Kragenaußenwandung vorbei diffundiert bzw. vorbeifließt und aus dem Medienbehälter austritt. Die Erzielung einer dauerhaften Dichtheit ist insbesondere dann erschwert, wenn es sich - wie bei dem hier beschriebenen Liner - um einen einfachen Kunststoff-Medienbehälter handelt. Aufgrund der zwischen dem Kragen aus Kunststoff und dem kegelstumpfartigen Abschnitt anliegenden Schub-/ Druckspannung neigt dieses Material in Folge dessen dazu der anliegenden Schub-/ Druckspannung auszuweichen. Man spricht hierbei vom so genannten Fließen oder Kriechen des Kunststoffes. Dies hat zur Folge, dass die Verpressung nach und nach gelockert wird (relaxiert) und somit zwangsläufig eine Undichtheit entsteht. Die EP 0 821 194 B1 führt deswegen ferner aus, dass zur Verbesserung der Abdichtung in der Kontaktfläche zwischen dem Abschnitt des Klemmrings und der Krageninnenwandung ein hochelastisches Dichtmittel vorgesehen ist. Erst dann ist sichergestellt, dass insbesondere der kritische Übergangsbereich zwischen dem kegelstumpfartigen Abschnitt und dem Gewindeabschnitt des Klemmrings dauerhaft dicht ist.

Nachteilig am Stand der Technik ist daher, dass insbesondere zur dauerhaften Gewährleistung einer Dichtheit zwischen dem Ventilanschlusselement und dem Kragen des Medienbehälters aufwändige und insbesondere zusätzliche Dichtelement notwendig sind.

Der Erfindung liegt daher die Aufgabe zugrunde, eine Vorrichtung zur Speicherung und Abgabe von flüssigen und/oder gasförmigen Medien unter Druck derart weiterzuentwickeln, dass diese bei einer geringeren Anzahl von Dichtelementen eine verbesserte und dauerhafte Dichtheit gewährleistet.

Diese Aufgabe wird erfindungsgemäß gelöst durch eine Vorrichtung zur Speicherung und Abgabe von flüssigen und/oder gasförmigen Medien unter Druck aufweisend:
- einen das Medium aufnehmenden Medienbehälter aus einem vernetzten thermoplastischen Kunststoff, vorzugsweise aus vernetztem Polyethylen,
- mindestens ein mit dem Medienbehälter verbundenes Ventilanschlusselement,
- mindestens ein mit dem Ventilanschlusselement verbindbares Ventilelement,
wobei der Medienbehälter einen nach außen vorstehenden Kragen mit einer Kragenaußenwandung einer Krageninnenwandung aufweist, wobei das obere Ende des Kragens den freien Querschnitt einer Öffnung des Medienbehälters definiert, wobei das Ventilanschlusselement im Bereich dieser Öffnung angeordnet und die Kragenaußenwandung von einer Innenwandung des Ventilanschlusselementes umschlossen ist, und wobei das Ventilelement einen Verpressungsabschnitt aufweist, der die Öffnung durchdringt und von der Krageninnenwandung umschlossen ist, und wobei der Außendurchmesser des Verpressungsabschnitts vor der Ventilelementmontage größer als der Durchmesser der Krageninnenwandung ist, sodass bei der Montage des Ventilelements sowohl zwischen dem Verpressungsabschnitt und der Krageninnenwandung als auch zwischen der Kragenaußenwandung und der Innenwandung des Ventilanschlusselementes ein dauerhafter Presssitz entsteht, der das unter Druck stehende Medien abdichtet. Ein dauerhafter Presssitz meint in diesem Zusammenhang, dass der Presssitz zumindest über die übliche Gebrauchsdauer der erfindungsgemäßen Vorrichtung von mindestens 10 Jahren und bei üblichen Gebrauchsbedingungen erhalten bleibt. Eine übliche Gebrauchsdauer und übliche Gebrauchsbedingungen können zudem durch die Erfüllung der in Anhang IV vorgeschriebenen Prüfungen für Wasserstoffbehälter des Behältertyps 4 für komprimierten (gasförmigen) Wasserstoff aus der Verordnung (EG) Nr. 79/2009 des Europäischen Parlaments und des Rates vom 14. Januar 2009 über die Typgenehmigung von wasserstoffbetriebenen Kraftfahrzeugen, sowie die Verordnung (EU) Nr. 406/2010 der Kommission vom 26. April 2010 zur Durchführung der Verordnung (EG) Nr. 79/2009 des Europäischen Parlaments und des Rates über die Typgenehmigung von wasserstoffbetriebenen Kraftfahrzeugen nachgewiesen werden. Durch das Vorsehen eines vernetzten thermoplastischen Kunststoffes bleibt der durch das Übermaß des Verpressungsabschnittes gegenüber dem Innendurchmesser der Krageninnenwandung gebildete Presssitz und die hiermit verbundene Schub- und/oder Druckspannung dauerhaft erhalten, da ein derart vernetzter thermoplastischer Kunststoff keine bzw. vernachlässigbar geringe Fließvorgänge (Kriechen) zeigt und sich weitgehend rein elastisch verhält. Als besonders vorteilhaft hat sich hierbei die Verwendung von vernetztem Polyethylen erwiesen. Als Vernetzung hat sich hierbei insbesondere die Vernetzung des Polyethylens unter erhöhter Temperatur durch radikal bildende Peroxide (PE-Xa) als vorteilhaft erwiesen. Darüber hinaus kann auch eine silanische Vernetzung von Polyethylen (PE-Xb) oder eine Strahlenvernetzung von Polyethylen (PE-Xc) angewendet werden. Der Vernetzungsgrad des thermoplastischen Kunststoffs bzw. des Polyethylens kann gemäß der vorliegenden Erfindung 5% bis 95%, bevorzugt 15% bis 90% und besonders bevorzugt 50% bis 85% betragen. Prinzipiell bezeichnet man das Ventilelement auch als On-Tank-Valve (kurz OTV). Das unter Druck stehende Medium kann insbesondere Wasserstoff (H₂) sein. Die Vorrichtung dient dann zur Speicherung und Abgabe von flüssigem und/oder gasförmigem Wasserstoff unter Druck.

An der Kragenaußenwandung kann, vorzugsweise im Bereich des oberen Endes, mindestens ein Rastelement angeordnet sein, das mit einem an der Innenwandung des Ventilanschlusselements ausgebildeten Rastgegenelement derart zusammenwirkt, dass bei der Montage des Ventilelements eine Verschiebung des Kragens relativ zu dem Ventilanschlusselement behindert ist. Insbesondere kann an der Kragenaußenwandung, vorzugsweise im Bereich des oberen Endes, mindestens ein Rastelement angeordnet sein, das mit einem an der Innenwandung des Ventilanschlusselements ausgebildeten Rastgegenelement derart zusammenwirkt, dass bei der Montage des Ventilelements eine Verschiebung des Kragens relativ zu dem Ventilanschlusselement verhindert ist. Vorteilhafterweise kann der Presssitz weiter verstärkt werden, da dann zwar höhere Montagekräfte notwendig sind um das Ventilelement zu montieren, diese höheren Montagekräfte jedoch nicht zu einem nachteiligen Verschieben des Kragens führen können, da eine Verschiebung des Kragens aufgrund der Rastelement-Rastgegenelement-Paarung behindert bzw. verhindert ist. Das Rastelement kann insbesondere von der Kragenaußenwandung abstehen, so dass das Rastelement aufgrund des in den Kragen eingeführten Verpressungsabschnitts des Ventilelements nicht mehr aus dem Rastgegenelement zurückweichen kann. Alternativ kann das Rastgegenelement von der Innenwandung des Ventilanschlusselementes abstehen und das Rastelement durch eine Ausnehmung in der Kragenaußenwandung oder einen Durchgang im Kragen, der sich bis zur Kragenaußenwandung erstreckt, gebildet sein in welche oder in welchen das Rastgegenelement eingreifen kann. Das Rastelement ist vorzugsweise einstückig mit dem Kragen ausgebildet, beispielsweise aus diesem mechanisch ausgebildet (z.B. durch Fräsen) oder bereits bei der Herstellung des Medienbehälters ausgebildet.

Das Ventilelement kann mehrteilig aufgebaut sein. Das Ventilelement kann aus mehreren Segmenten bestehen. Der Verpressungsabschnitt kann insbesondere an einem separaten ersten Segment des Ventilelements angeordnet sein. Das separate erste Segment kann insbesondere hülsenförmig ausgebildet sein. Der mehrteilige Aufbau ist vorteilhaft für den Fall einer Wartung oder Reparatur der erfindungsgemäßen Vorrichtung, da ggf. nur ein Teil bzw. ein Segment des Ventilelements ausgetäuscht oder gewartet werden muss. Als vorteilhafte Ausgestaltung der Erfindung kann vorgesehen sein, dass oberhalb des Kragens ein Dichtungselement, vorzugsweise ein O-Ring vorgesehen ist, welches das Ventilanschlusselement gegen das Ventilelement abdichtet. Vorteilhafterweise erfolgt die Abdichtung somit zwischen dem Ventilanschlusselement und dem Ventilelement und nicht zwischen dem Ventilanschlusselement und der Außenwandung des Kragens bzw. zwischen dem Ventilelement und der Innenwandung des Kragens. Dies ist insbesondere dann von Vorteil, wenn das Ventilanschlusselement und das Ventilelement aus einem metallischen Werkstoff gebildet sind. Derartige Werkstoffe neigen bei den Einsatztemperaturen der Vorrichtung nicht zum Kriechen, sodass durch die direkte Abdichtung dieses metallischen Ventilanschlusselements gegen das metallische Ventilelement mittels eines Dichtelements eine zusätzliche dauerhafte Dichtung gewährleistet ist. Das Dichtelement kann durch ein Stützelement (z.B. einen Stützring) lagefixiert sein. Das Stützelement verhindert eine Lageveränderung des Dichtelements hinein in den Spalt zwischen Ventilelement und Ventilanschlusselement im oder während des Gebrauch der Vorrichtung. Das Stützelement kann zudem ein Lösen des Dichtelements aus seiner Aufnahme (z.B. umlaufende Ringnut innerhalb des Ventilelements) an dem Ventilelement verhindern. Das Stützelement befindet sich vorzugsweise in derselben Aufnahme wie das Dichtelement. Für den Fall eines mehrteiligen Aufbaus des Ventilelementes ist das Dichtungselement vorzugsweise an einem separaten zweiten Segment des Ventilelements angeordnet. Das Dichtungselement kann dann vorteilhaft leichter gewechselt bzw. gewartet werden.

Vorzugsweise liegt der Quotient aus der Differenz des Außendurchmessers des Verpressungsabschnitts und des Durchmessers der Krageninnenwandung in Bezug zu dem Durchmesser der Krageninnenwandung in einem Bereich zwischen 0,001 und 0,2, vorzugsweise zwischen 0,01 und 0,15, weiter vorzugsweise zwischen 0,02 und 0,1, weiter vorzugsweise zwischen 0,04 und 0,08, weiter vorzugsweise zwischen 0,05 und 0,07. Alternativ kann der Quotient aus der Differenz des Außendurchmessers des Verpressungsabschnitts und des Durchmessers der Krageninnenwandung im Bezug zu dem Durchmesser der Krageninnenwandung in einem Bereich zwischen 0,001 und 0,2, vorzugsweise zwischen 0,01 und 0,15, weiter vorzugsweise zwischen 0,02 und 0,1, weiter vorzugsweise zwischen 0,04 und 0,08, weiter vorzugsweise zwischen 0,05 und 0,07 liegen.

Dieser als Übermaß bezeichenbare Quotient weist für diese Bereiche einen optimierten Wert auf. Diese optimierten Werte gewährleisten akzeptable Montagekräfte des Ventilelements bei einem die Dichtheit dauerhaft gewährleistenden Presssitz.

Durch die Ausbildung eines dauerhaften Presssitzes bei der Montage des Ventilelements sowohl zwischen dem Verpressungsabschnitt und der Krageninnenwandung als auch zwischen der Kragenaußenwandung und der Innenwandung des Ventilanschlusselementes kann im Bereich des Verpressungsabschnittes und/oder der Kragenaußenwandung kein separates Dichtungselement vorgesehen sein. In vorteilhafter Weise kann durch die erfindungsgemäße Ausbildung der Vorrichtung in diesem Bereich auf ein zusätzliches Dichtungselement, im Gegensatz zu Vorrichtungen des Standes der Technik, vollständig verzichtet werden.
Der Verpressungsabschnitt kann eine zylindrische oder kegelstumpfförmige Geometrie aufweisen. Insbesondere eine zylindrische Geometrie hat sich bei der Fertigung derartiger Vorrichtungen als besonders bevorzugt erwiesen, da die hierbei einzuhaltenden Toleranzen am einfachsten realisiert und eingehalten werden können. Zudem weist eine zylindrische Geometrie einen gleichmäßigen Presssitz und eine gleichmäßige Druckspannungsverteilung entlang der gesamten Kontaktfläche (Dichtfläche) zwischen Verpressungsabschnitt und Krageninnenwandung auf. Im Fall einer kegelstumpfförmigen Geometrie ist der jeweilige Außendurchmesser des Verpressungsabschnitts vor der Ventilelementmontage größer als der jeweilige - im Montagezustand dann korrespondierende bzw. dann gegenüberliegende - Durchmesser der Krageninnenwandung.

Das Ventilanschlusselement kann mindestens eine definierte Unregelmäßigkeit aufweisen. Diese Unregelmäßigkeit bewirkt eine punktuelle und/oder linienförmige Erhöhung der Druckspannung und ermöglicht eine weitere Verbesserung der Dichtwirkung. Diese Unregelmäßigkeit kann insbesondere eine Oberflächenunregelmäßigkeit sein. Beispielhaft für eine definierte Oberflächenunregelmäßigkeit sind gezielt eingestellte Rauheitswerte, ein definiert eingebrachtes Fischgrätmuster, Rippen oder andere Ausformungen auf der Innenwandung oder Ausnehmungen in der Innenwandung.

Alternativ oder in Kombination kann auch der Kragen bzw. die Kragenaußenwandung mindestens eine definierte Unregelmäßigkeit aufweisen. Diese Unregelmäßigkeit bewirkt eine punktuelle und/oder linienförmige Erhöhung der Druckspannung und ermöglicht eine weitere Verbesserung der Dichtwirkung. Diese Unregelmäßigkeit kann insbesondere eine Oberflächenunregelmäßigkeit sein. Beispielhaft für eine definierte Oberflächenunregelmäßigkeit sind gezielt eingestellte Rauheitswerte, ein definiert eingebrachtes Fischgrätmuster, Rippen oder andere Ausformungen oder Ausnehmungen auf oder in der Kragenaußenwandung und/oder Krageninnenwandung.

Bevorzugt ist die definierte Unregelmäßigkeit und / oder die definierte Oberflächenunregelmäßigkeit durch einen im Längsschnitt wellenförmigen Kragen gebildet. Der Kragen kann eine konstante Wandstärke aufweisen. Der im Längsschnitt wellenförmig ausgebildete Kragen kann in einem Teilbereich, segmentweise oder über die gesamte Länge des Kragens wellenförmig ausgebildet sein. Aufgrund des Übermaßes des Außendurchmessers des Verpressungsabschnitts vor der Ventilelementmontage im Vergleich zu dem Durchmesser der Krageninnenwandung wird der im Längsschnitt wellenförmige Kragen weitgehend geglättet, so dass keine oder eine im Vergleich zum Ausgangszustand vor der Ventilelementmontage abgeflachte Wellenform im Längsschnitt entsteht. Vorteilhafterweise kann ein Presssitz mit einer höheren Verpressung erreicht werden, ohne im gleichen Maße die Montagekräfte des Ventilelements zu erhöhen. Aufgrund der erfindungsgemäßen Verwendung eines vernetzten thermoplastischen Kunststoffes, vorzugsweise eines vernetzten Polyethylens für den Medienbehälter - und folglich für den Kragen- wird der vernetzte thermoplastische Kunststoff bei Temperaturwechseln, insbesondere bei Temperaturerhöhungen, bestrebt sein, die ursprüngliche Wellenform wieder einzunehmen, so dass bei einem Temperaturwechsel, insbesondere bei einer Temperaturerhöhung zudem ein selbstdichtender Effekt zwischen der Kragenaußenwandung und der Innenwandung des Ventilanschlusselements entsteht. Dieser Effekt kann dadurch unterstützt werden, dass die Innenwandung des Ventilanschlusselements ebenfalls eine definierte Oberflächenunregelmäßigkeit, vorzugsweise in Form von Rippen oder Ausformungen aufweist, welche weiter vorzugsweise in einer Wellenform angeordnet sind. Das sich quasi an seine alte Form erinnernde Material des Kragens zieht sich dann bei Temperaturwechseln, insbesondere bei Temperaturerhöhungen, selbstständig dichtend in die Zwischenräume zwischen den Rippen oder Ausformungen. Bevorzugt ist die Oberflächenunregelmäßigkeit der Innenwandung des Ventilanschlusselementes durch Rippen oder Ausformungen gebildet, welche in einer Wellenform angeordnet sind, wobei die Wellenlänge und/oder Amplitude dieser Wellenform kleiner gewählt ist als die Wellenlänge und/oder Amplitude des im Längsschnitt wellenförmigen Kragens. Insbesondere eine im Vergleich zu der Wellenlänge des im Längsschnitt wellenförmigen Kragens kleinere Wellenlänge der Oberflächenunregelmäßigkeit der Innenwandung des Ventilanschlusselementes, welche durch Rippen oder Ausformungen gebildet ist die in einer Wellenform angeordnet sind, gewährleistet vorteilhafterweise, dass mindestens ein Wellenberg des im Längsschnitt wellenförmigen Kragens einem Wellenberg der Innenwandung zumindest im Wesentlichen gegenüberliegt und in diesem Bereich lokal eine sehr hohe Verpressung und eine damit verbundene weiter verbesserte Abdichtung zwischen Kragenaußenwandung und Innenwandung des Ventilanschlusselementes entsteht.

Vorzugsweise ist der Medienbehälter außerhalb des Bereiches des Kragens mit dem Ventilanschlusselement fest verbunden. Um sich den Vorteil eines möglichst flächig anliegenden Presssitzes zu erhalten, ist es besonders vorteilhaft, die Verbindung zwischen dem Medienbehälter und dem Ventilanschlusselement nur außerhalb des Bereichs des Kragens zu realisieren. Hierzu kann vorgesehen sein, dass der Medienbehälter mittels einer Schraubverbindung und/oder mittels einer Klebstoffschicht mit dem Ventilanschlusselement fest verbunden ist.
Der Medienbehälter kann von einer, vorzugsweise gewickelten oder geflochtenen, Armierungsschicht umgeben sein. Insbesondere zur Realisierung von Drücken des Mediums innerhalb des Medienbehälters im typischen Bereich von mehreren hundert bar ist eine Armierungsschicht zwingend erforderlich. Die Armierungsschicht kann Filamente in Form von z.B. Fäden oder Fasern aufweisen. Die Filamente können aus Kohlenstoff, Glas, Polyamid, Mineralwerkstoffen oder einer Kombination der vorgenannten Werkstoffe gebildet sein.

Teil der Erfindung ist ferner eine Kraftstoffenergieumwandlungsvorrichtung mit einer Brennstoffzelleneinheit, mindestens einer Medienverbindungsleitung, mindestens einem Druckminderer und mindestens einer erfindungsgemäßen Vorrichtung. Hierbei kann die Medienverbindungsleitung die Vorrichtung mit der Brennstoffzelleneinheit medienleitend verbinden und der Druckminderer kann in Medienflussrichtung vor der Brennstoffzelleneinheit angeordnet sein.

Weiterhin Teil der Erfindung ist ein Kraftfahrzeug mit einer erfindungsgemäßen Vorrichtung und ein Kraftfahrzeug mit einer Kraftstoffenergieumwandlungsvorrichtung nach Anspruch 16.

Ein Verfahren zur Montage einer Vorrichtung zur Speicherung und Abgabe von flüssigen und/oder gasförmigen Medien unter Druck umfasst folgende Schritte, wobei die Vorrichtung Folgendes aufweist: einen das Medium aufnehmenden Medienbehälter aus einem vemetzten thermoplastischen Kunststoff, vorzugsweise aus vernetztem Polyethylen, mindestens ein Ventilanschlusselement, mindestens ein mit dem Ventilanschlusselement verbindbares Ventilelement, wobei der Medienbehälter einen nach außen vorstehenden Kragen mit einer Kragenaußenwandung und einer Krageninnenwandung aufweist und das obere Ende des Kragens den freien Querschnitt einer Öffnung des Medienbehälters definiert, wobei das Ventilanschlusselement im Bereich dieser Öffnung angeordnet und die Kragenaußenwandung dabei von einer Innenwandung des Ventilanschlusselementes umschlossen wird, und wobei das Ventilelement einen Verpressungsabschnitt aufweist, der die Öffnung durchdringt und von der Krageninnenwandung umschlossen ist, und wobei der Verpressungsabschnitt aufgrund eines Übermaßes in die Öffnung eingepresst wird, sodass sowohl zwischen dem Verpressungsabschnitt und der Krageninnenwandung als auch zwischen der Kragenaußenwandung und dem Ventilanschlusselement ein dauerhafter Presssitz entsteht, der gegen das unter Druck stehende Medium abdichtet.
Die vorgenannten vorteilhaften Ausgestaltungen der erfindungsgemäßen Vorrichtung können selbstredend auch für das vorstehende Verfahren Verwendung finden.

Im Folgenden wird die Erfindung anhand lediglich Ausführungsbeispiele darstellender Zeichnungen erläutert. Es zeigen:
- Fig. 1: einen axialen Längsschnitt durch eine erfindungsgemäße Vorrichtung vor der Montage des Ventilelements,
- Fig. 2: einen axialen Längsschnitt durch eine erfindungsgemäße Vorrichtung nach der Montage des Ventilelements,
- Fig. 3: eine Detaildarstellung des axialen Längsschnittes durch eine erfindungsgemäße Vorrichtung nach der Montage des Ventilelements aus Figur 2,
- Fig. 4: eine schematische Darstellung einer erfindungsgemäßen Kraftstoffenergieumwandlungsvorrichtung,
- Fig. 5: einen axialen Längsschnitt durch eine weitere Ausführungsform einer erfindungsgemäßen Vorrichtung vor der Montage des Ventilelements,
- Fig. 6: einen axialen Längsschnitt durch eine weitere Ausführungsform einer erfindungsgemäßen Vorrichtung nach der Montage des Ventilelements,
- Fig. 7 a,b,c: einen axialen Längsschnitt durch eine weitere Ausführungsform einer erfindungsgemäßen Vorrichtung vor der Montage des Ventilelements,
- Fig. 8: einen axialen Längsschnitt durch eine weitere Ausführungsform einer erfindungsgemäßen Vorrichtung nach der Montage des Ventilelements,
- Fig. 9a, b: einen axialen Längsschnitt durch eine weitere Ausführungsform einer erfindungsgemäßen Vorrichtung vor der Montage des Ventilelements,
- Fig. 10: eine vergrößerte Darstellung eines Teilbereichs des axialen Längsschnitt durch die weitere Ausführungsform gemäß Fig. 9a, b einer erfindungsgemäßen Vorrichtung vor der Montage des Ventilelements,
- Fig. 11: einen axialen Längsschnitt durch die weitere Ausführungsform gemäß Fig. 10 einer erfindungsgemäßen Vorrichtung nach der Montage des Ventilelements.

In den Figuren werden gleiche oder funktionsgleiche Elemente mit den gleichen Bezugszeichen versehen.

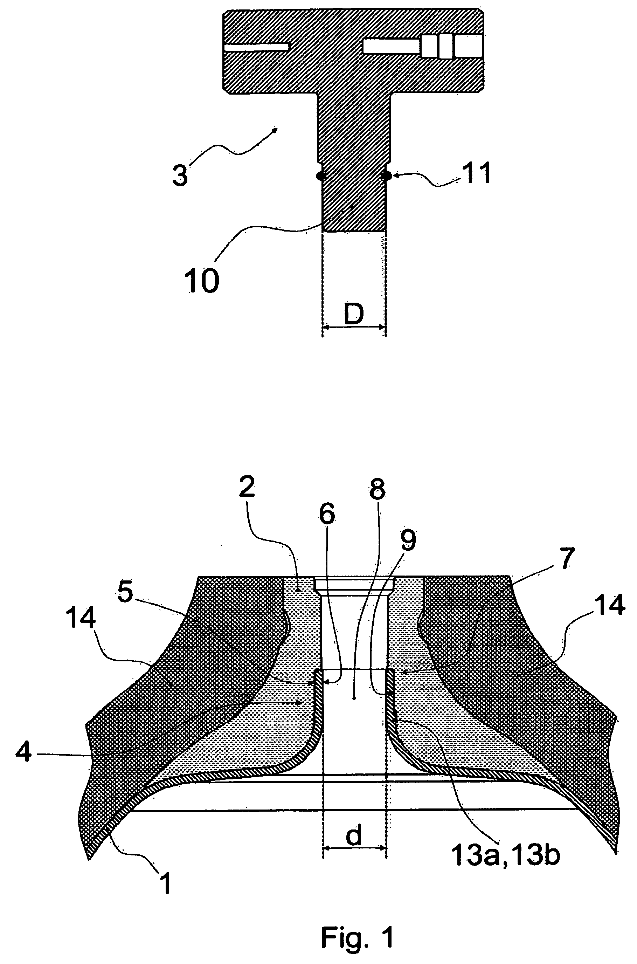

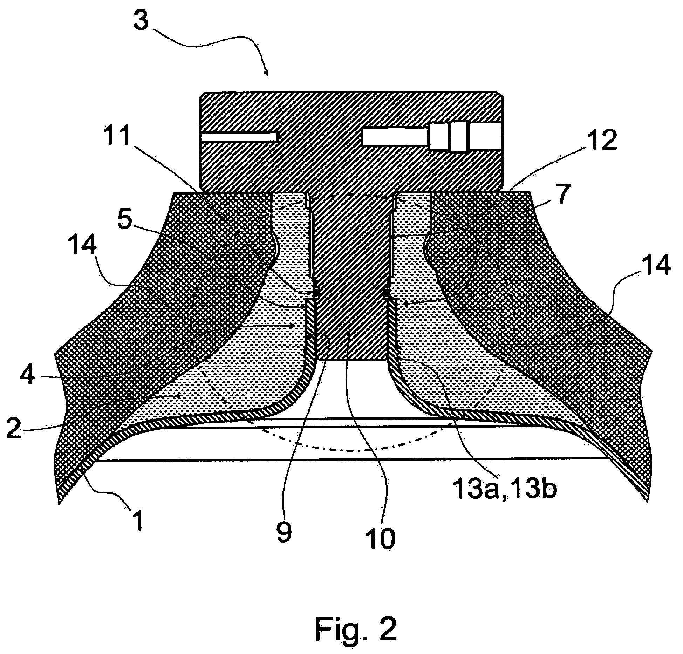

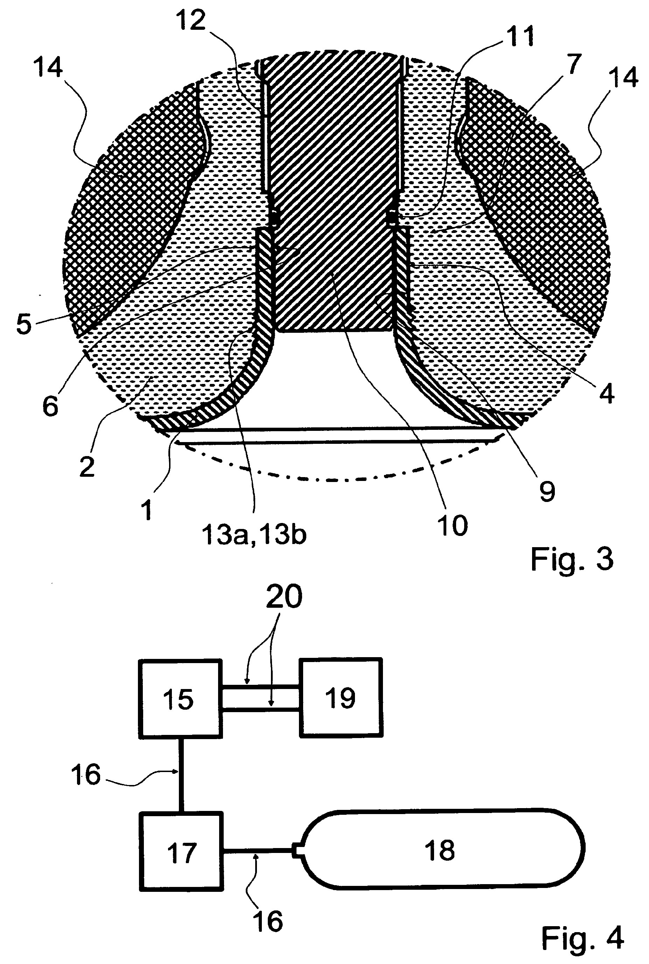

In den Figuren 1 bis 3 ist ein axialer Längsschnitt durch eine erfindungsgemäße Vorrichtung vor und nach der Montage des Ventilelements 3 dargestellt. Die erfindungsgemäße Vorrichtung zur Speicherung und Abgabe von flüssigen und/oder gasförmigen Medien unter Druck weist dabei einen das Medium aufnehmenden Medienbehälter 1 aus Kunststoff auf. Der Medienbehälter 1 ist vorzugsweise in einem Blasformverfahren oder in einem Rotationsverfahren oder in einem Thermoumformverfahren hergestellt. Mit dem Medienbehälter 1 ist ein Ventilanschlusselement 2 verbunden. Die Vorrichtung weist ferner ein mit dem Ventilanschlusselement 2 verbindbares Ventilelement 3 auf (vgl. Fig. 1). Der Medienbehälter 1 weist dabei einen nach außen vorstehenden Kragen 4 mit einer Kragenaußenwandung 5 und einer Krageninnenwandung 6 auf. Das obere Ende 7 des Kragens 4 definiert den freien Querschnitt einer Öffnung 8 des Medienbehälters. Das Ventilanschlusselement 2 ist im Bereich dieser Öffnung 8 angeordnet und die Kragenaußenwandung 5 von einer Innenwandung 9 des Ventilanschlusselements 2 umschlossen. Das Ventilelement 3 weist einen Verpressungsabschnitt 10 auf. Dieser ist dafür vorgesehen, die Öffnung 8 zu durchdringen und von der Krageninnenwandung 6 umschlossen zu werden. Der Medienbehälter 1 besteht aus einem vernetzten thermoplastischen Kunststoff, in diesem Ausführungsbeispiel aus vernetztem Polyethylen des Typs PE-Xa. Der Außendurchmesser D des Verpressungsabschnitts 10 ist vor der Ventilelementmontage größer als der Durchmesser d der Krageninnenwandung 6 (vgl. Fig. 1). Bei bzw. nach der Montage des Ventilelements 3 (vgl. Fig. 2 und Fig. 3) entsteht somit sowohl zwischen dem Verpressungsabschnitt 10 und der Krageninnenwandung 6 als auch zwischen der Kragenaußenwandung 5 und der Innenwandung 9 des Ventilanschlusselements 2 ein dauerhafter Presssitz, der das unter Druck stehende Medium abdichtet. Oberhalb des Kragens ist ein Dichtelement 11 in Form eines O-Rings 11 vorgesehen, welches das Ventilanschlusselement 2 gegen das Ventilelement 3 abdichtet. Der O-Ring 11 ist durch einen Stützring (hier nicht näher dargestellt) lagefixiert. Der Stützring verhindert ein herein drücken des O-Rings 11 in den Spalt zwischen Ventilelement 3 und Ventilanschlusselement 2 bzw. ein herausfallen des O-Ring aus seiner umlaufenden Ringnut innerhalb des Ventilelements 3. Der Stützring befindet sich in derselben umlaufenden Ringnut. Der Quotient (D-d) / d aus der Differenz (D-d) des Außendurchmessers D des Verpressungsabschnitts 10 und des Durchmessers d der Krageninnenwandung 6 in Bezug zu (=Division durch) dem Durchmesser d der Krageninnenwandung 6 liegt in einem Bereich zwischen 0,04 und 0,08. Im Bereich des Verpressungsabschnitts 10 und im Bereich der Kragenaußenwandung 5 ist kein separates Dichtungselement vorgesehen. Der Verpressungsabschnitt 10 weist eine zylindrische Geometrie auf. Oberhalb des Kragens 4 ist eine Verschraubung 12 zwischen dem Ventilelement 3 und dem Ventilanschlusselement 2 (vgl. Fig. 3) vorgesehen. Die Innenwandung 9 des Ventilanschlusselements 2 weist eine definierte Unregelmäßigkeit in Form eines Fischgrätmusters (hier nicht näher dargestellt) auf. Der Medienbehälter 1 ist außerhalb des Bereichs des Kragens 4 mit dem Ventilanschlusselement 2 fest verbunden. Hierbei ist der Medienbehälter 1 mittels einer Schraubverbindung 13a und mittels einer Klebstoffschicht 13b mit dem Ventilanschlusselement 2 fest verbunden. Der Medienbehälter 1 ist von einer gewickelten bzw. geflochtenen Armierungsschicht 14 umgeben. Die Armierungsschicht 14 weist Filamente z.B. aus Fäden oder Fasern auf. Die Filamente sind in diesem Ausführungsbeispiel aus Kohlenstoff gebildet. Denkbare weitere Werkstoffe der Filamente sind Glas, Polyamid, Mineralwerkstoffe oder auch eine Kombination aller vorgenannten Werkstoffe. Das in den Figuren 1 bis 3 dargestellte Ventilelement 3 ist einstückig aus einem metallischen Werkstoff ausgebildet. Die das Medium aus dem Medienbehälter 1 nach außen führenden Durchführungen durch das Ventilelement 3 liegen außerhalb der axialen Schnittebene der Figuren 1 bis 3, so dass diese hier nicht erkennbar sind. Prinzipiell bezeichnet man das Ventilelement 3 auch als On-Tank-Valve (kurz OTV).

Ein Verfahren zur Montage einer in den Figuren 1 bis 3 und 5 bis 11 dargestellten Vorrichtung umfasst eine Vorrichtung zur Speicherung und Abgabe von flüssigen und/oder gasförmigen Medien unter Druck wobei die Vorrichtung folgendes aufweist:
- einen das Medium aufnehmenden Medienbehälter (1) aus Kunststoff,
- mindestens ein Ventilanschlusselement (2),
- mindestens ein mit dem Ventilanschlusselement (2) verbindbares Ventilelement (3, 3a),
wobei der Medienbehälter (1) einen nach außen vorstehenden Kragen (4) mit einer Kragenaußenwandung (5) und einer Krageninnenwandung (6) aufweist und das obere Ende (7) des Kragens (4) den freien Querschnitt einer Öffnung (8) des Medienbehälters (1) definiert, wobei das Ventilanschlusselement (2) im Bereich dieser Öffnung (8) angeordnet und die Kragenaußenwandung (5) dabei von einer Innenwandung (9) des Ventilanschlusselementes (2) umschlossen wird, und wobei das Ventilelement (3, 3a) einen Verpressungsabschnitt (10) aufweist, der die Öffnung (8) durchdringt und von der Krageninnenwandung (6) umschlossen ist, und wobei der Medienbehälter (1) aus einem vernetzen thermoplastischen Kunststoff, vorzugsweise aus vernetztem Polyethylen, besteht und der Verpressungsabschnitt (10) aufgrund eines Übermaßes in die Öffnung (8) eingepresst wird, so dass sowohl zwischen dem Verpressungsabschnitt (10) und der Krageninnenwandung (6) als auch zwischen der Kragenaußenwandung (5) und dem Ventilanschlusselement (2) ein dauerhafter Presssitz entsteht, der gegen das unter Druck stehende Medium abdichtet.

Die Figur 4 zeigt eine erfindungsgemäße Kraftstoffenergieumwandlungsvorrichtung mit einer Brennstoffzelleneinheit 15, einer Medienverbindungsleitung 16, einem Druckminderer 17 und einer erfindungsgemäßen Vorrichtung 18. Die Medienverbindungsleitung 16 verbindet die Vorrichtung 18 medienleitend mit der Brennstoffzelleneinheit 15. Das heißt, dass über die Medienverbindungsleitung 16 das in der erfindungsgemäßen Vorrichtung 18 gespeicherte Medium, vorzugsweise Wasserstoff, zur Brennstoffzelle fließen kann. Da das unter Druck stehende Medium innerhalb der erfindungsgemäßen Vorrichtung 18 unter einem stark erhöhten Druck (in diesem Ausführungsbeispiel Wasserstoff mit 750 bar) steht, ist in Medienflussrichtung vor der Brennstoffzelleneinheit 15 ein Druckminderer 17 angeordnet. Die in der Brennstoffzelle aus dem Kraftstoff (in diesem Fall Wasserstoff) umgewandelte elektrische Energie wird über elektrische Verbindungsleitungen 20 einem elektrischen Verbraucher 19 (z.B. ein Elektromotor) oder einem Energiespeicher 19 (z.B. Traktionsbatterie) zugeführt.

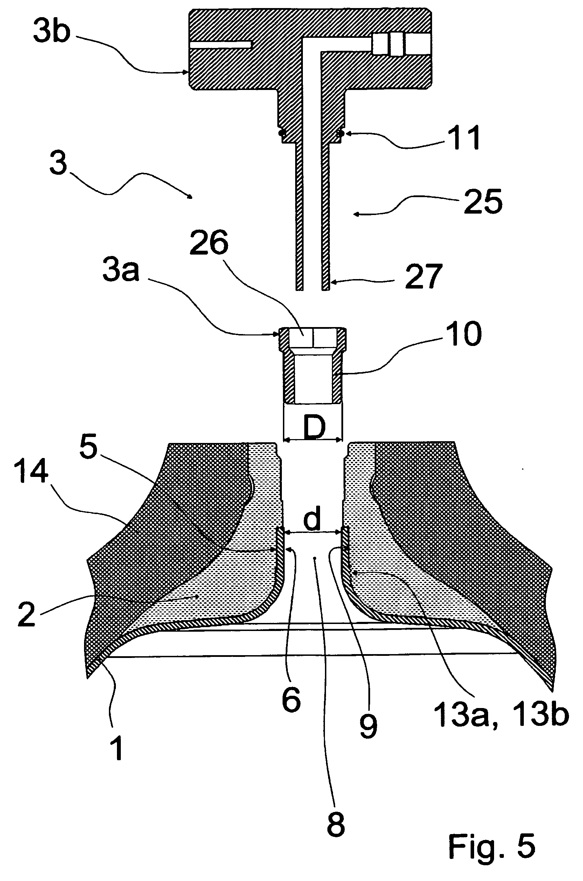

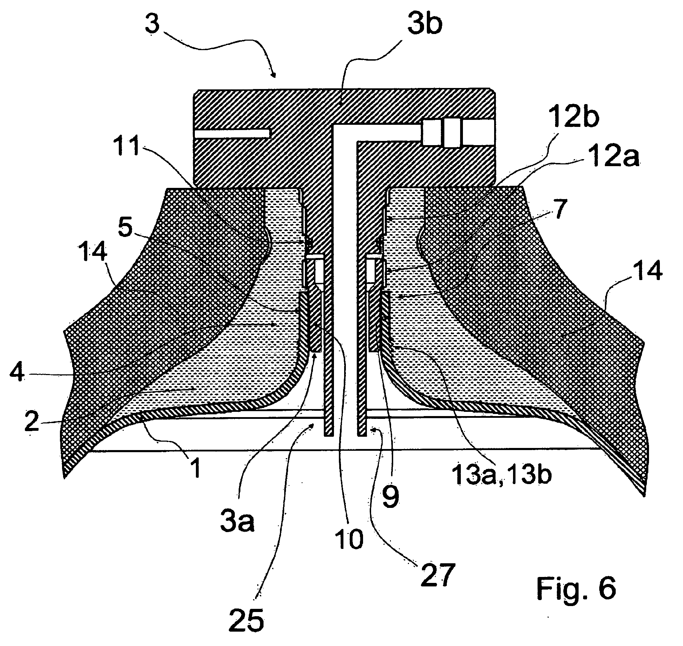

Das in den Figuren 5 und 6 dargestellte Ausführungsbeispiel zeigt eine weitere Ausführungsform einer erfindungsgemäßen Vorrichtung zur Speicherung und Abgabe von flüssigen und / oder gasförmigen Medien unter Druck. Die Vorrichtung weist auf: einen das Medium aufnehmenden Medienbehälter 1 aus Kunststoff, mindestens ein mit dem Medienbehälter 1 verbundenes Ventilanschlusselement 2, mindestens ein mit dem Ventilanschlusselement 2 verbindbares Ventilelement 3, 3a, 3b. Der Medienbehälter 1 weist einen nach außen vorstehenden Kragen 4 mit einer Kragenaußenwandung 5 und einer Krageninnenwandung 6 auf. Das obere Ende 7 des Kragens 4 definiert den freien Querschnitt einer Öffnung 8 des Medienbehälters, wobei das Ventilanschlusselement 2 im Bereich dieser Öffnung 8 angeordnet und die Kragenaußenwandung 5 von einer Innenwandung 9 des Ventilanschlusselementes 2 umschlossen ist. Das Ventilelement 3, 3a weist einen Verpressungsabschnitt 10 auf, der die Öffnung 8 durchdringt und von der Krageninnenwandung 6 umschlossen ist. Das Ventilelement 3 ist mehrteilig aufgebaut. Der Verpressungsabschnitt 10 ist dabei an einem separaten ersten Segment 3a des Ventilelements 3 angeordnet. Ferner besteht der Medienbehälter 1 aus einem vernetzten thermoplastischen Kunststoff, vorzugsweise aus vernetztem Polyethylen. Der Außendurchmesser D des Verpressungsabschnitts 10 des ersten Segments 3a des Ventilelements 3 ist vor der Ventilelementmontage größer als der Durchmesser d der Krageninnenwandung 6, so dass bei der Montage des ersten Segments 3a des Ventilelements 3 sowohl zwischen dem Verpressungsabschnitt 10 und der Krageninnenwandung 6 als auch zwischen der Kragenaußenwandung 5 und der Innenwandung 9 des Ventilanschlusselements 2 ein dauerhafter Presssitz entsteht, der das unter Druck stehende Medium abdichtet. Oberhalb des Kragens 4 ist ein Dichtelement 11, vorzugsweise ein O-Ring 11 vorgesehen, welches das Ventilanschlusselement 2 gegen das Ventilelement 3, 3b abdichtet. Das Dichtungselement 11 ist an einem separaten zweiten Segment 3b des Ventilelements 3 angeordnet. Der Quotient (D-d) / d aus der Differenz (D-d) des Außendurchmessers D des Verpressungsabschnitts 10 des ersten Segments 3a des Ventilelements 3 und des Durchmessers d der Krageninnenwandung 6 in Bezug zu dem Durchmesser d der Krageninnenwandung 6 liegt in einem Bereich zwischen 0,04 und 0,08. Der Medienbehälter 1 ist von einer, vorzugsweise gewickelten oder geflochtenen, Armierungsschicht 14 umgeben. Die Armierungsschicht 14 weist Filamente, z. B. Fäden oder Fasern auf. Die Filamente sind in diesem Ausführungsbeispiel aus Glas bzw. einem Glaswerkstoff gebildet. Sowohl das erste Segment 3a als auch das zweite Segment 3b des Ventilelements 3 sind mittels einer Verschraubung 12a, 12b mit dem Ventilanschlusselement 2 verbindbar. Hierzu ist oberhalb des Kragens 4 eine erste Verschraubung 12a zwischen dem ersten Segment 3a und dem Ventilanschlusselement 2 und eine zweite Verschraubung 12b zwischen dem zweiten Segment 3b des Ventilelements 3 und dem Ventilanschlusselement 2 vorgesehen. Das erste Segment 3a des Ventilelements 3 weist eine Schlüsselaufnahme 26 für einen Innensechskantschlüssel auf, mittels welchem das erste Segment 3a über die Verschraubung 12a mit dem Ventilanschlusselement 2 verbindbar ist. Das zweite Segment 3b des Ventilanschlusselements 3 weist eine Verlängerung 25 der medienführenden Ventildurchführung auf, über welche das Medium über das Ventilanschlusselement 3 bzw. 3b abgeführt werden kann. Die Verlängerung 25 ist so ausgebildet, dass diese eine durchgehende Ausnehmung des ersten Segments 3a des Ventilanschlusselements 3 durchdringt bzw. durchfasst und im montierten Zustand der Vorrichtung soweit in den Medienbehälter 1 hineinragt, dass eine thermische Belastung der Vorrichtung, insbesondere bei der Betankung des Medienbehälters 1, verringert ist. Hierzu ragt die Verlängerung 25 über das erste Segment 3a hinaus in den Medienbehälter hinein. Vorzugsweise ist im montierten Zustand der Vorrichtung das untere Ende 27 der Verlängerung 25 mindestens mit einem Abstand größer/gleich des Außendurchmessers D des ersten Segments 3a des Ventilanschlusselements 3 von dem ersten Segment 3a beabstandet.

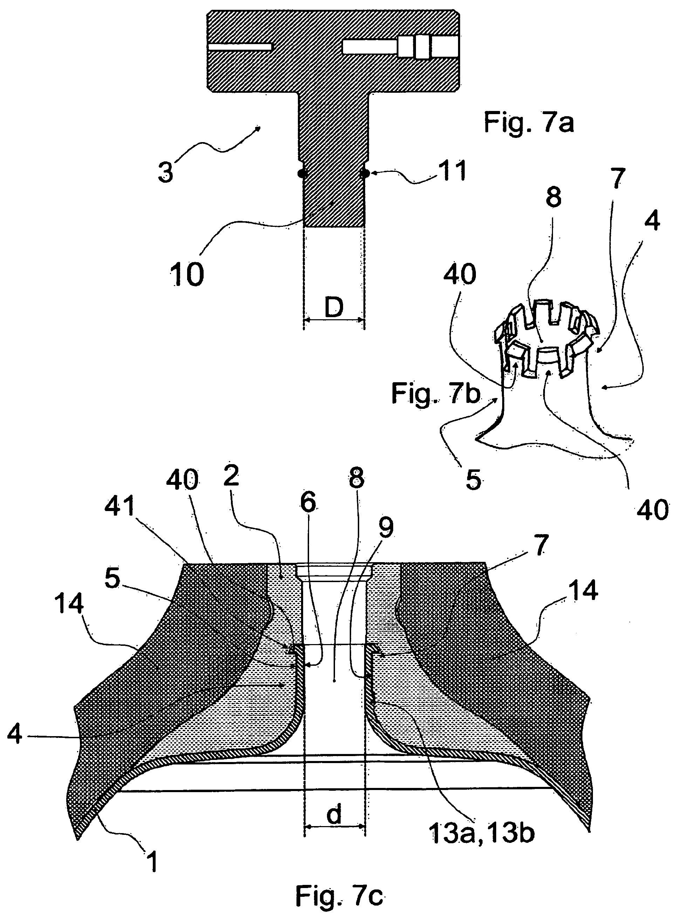

In den Fig. 7a, 7b und 7c sind axiale Längsschnitte durch eine weitere Ausführungsform einer erfindungsgemäßen Vorrichtung vor der Montage des Ventilelements 3 dargestellt. Ergänzend zu den bereits zu Fig. 1 beschriebenen Elementen sind an der Kragenaußenwandung 5 im Bereich des oberen Endes 7 mehrere Rastelemente 40 angeordnet (vgl. Detaildarstellung in Fig. 7b). Die Rastelemente 40 wirken mit an der Innenwandung 9 des Ventilanschlusselements 2 ausgebildeten Rastgegenelement 41 derart zusammen, dass bei der Montage des Ventilelements 3 eine Verschiebung des Kragens 4 relativ zu dem Ventilanschlusselement 2 behindert oder verhindert ist. Vorteilhafterweise kann der Presssitz weiter verstärkt werden, da dann zwar höhere Montagekräfte notwendig sind um das Ventilelement 3 zu montieren, diese höheren Montagekräfte jedoch nicht zu einem nachteiligen Verschieben des Kragens 4 führen können, da eine Verschiebung des Kragens 4 aufgrund der Rastelement-Rastgegenelement-Paarung behindert oder verhindert ist. Das Rastelement 40 steht von der Kragenaußenwandung 5 ab, so dass das Rastelement 40 aufgrund des in die Öffnung 8 des Kragens 4 eingeführten Verpressungsabschnitts 10 des Ventilelements 3 nicht mehr aus dem Rastgegenelement 41 (beispielsweise einer umlaufenden Ringnut) zurückweichen kann. Alternativ kann das Rastgegenelement von der Innenwandung 9 des Ventilanschlusselementes 2 abstehen und das Rastelement z.B. durch eine Ausnehmung in der Kragenaußenwandung 5 oder einen Durchgang im Kragen 4, der sich bis zur Kragenaußenwandung 5 erstreckt, gebildet sein in welche oder in welchen das Rastgegenelement eingreifen kann. Das Rastelement 40 ist einstückig mit dem Kragen 4 und dem Medienbehälter 1 ausgebildet, beispielsweise aus diesem mechanisch ausgebildet (z.B. durch Fräsen) oder bereits bei der Herstellung des Medienbehälters 1 ausgebildet.

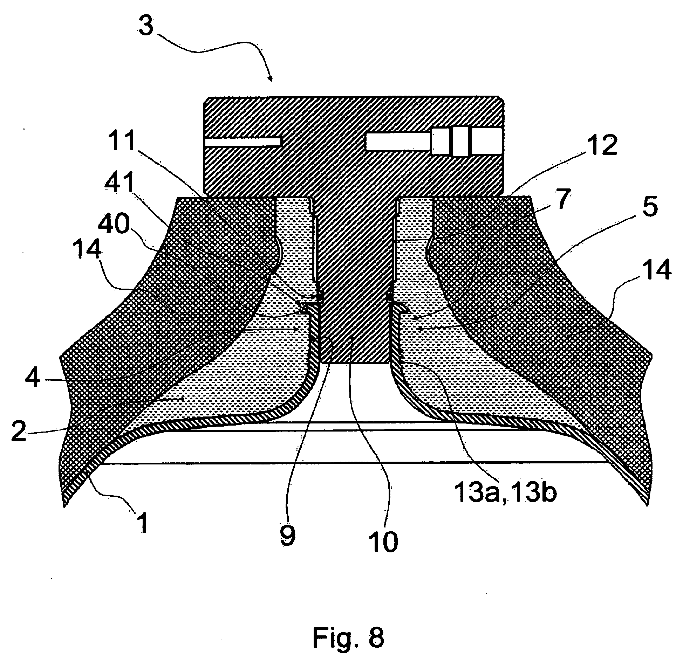

Die Fig. 8 zeigt einen axialen Längsschnitt durch die in Fig. 7a, 7b, 7c dargestellte weitere Ausführungsform einer erfindungsgemäßen Vorrichtung nach der Montage des Ventilelements 3. Das Rastelement 40 steht von der Kragenaußenwandung 5 ab, so dass das Rastelement 40 aufgrund des in die Öffnung 8 des Kragens 4 eingeführten Verpressungsabschnitts 10 des Ventilelements 3 nicht mehr aus dem Rastgegenelement 41 zurückweichen kann. Bei der Montage des Ventilelements 3 kommt es aufgrund des Übermaßes zu einer Druckkraft, welche eine Verschiebung des Kragens 4 relativ zu dem Ventilanschlusselement 2 in Richtung Medienbehälter 1 bewirkt, die schlimmstenfalls dazu führt, dass der Kragen 4 in den Medienbehälter 1 gedrückt wird. Durch das Vorsehen einer Rastelement-Rastgegenelement-Paarung verhindert das Ventilelement 3 bei seiner Montage somit selbst, dass der Kragen 4 verschoben werden kann, indem es ein Lösen der Rastelement-Rastgegenelement-Paarung verhindert.

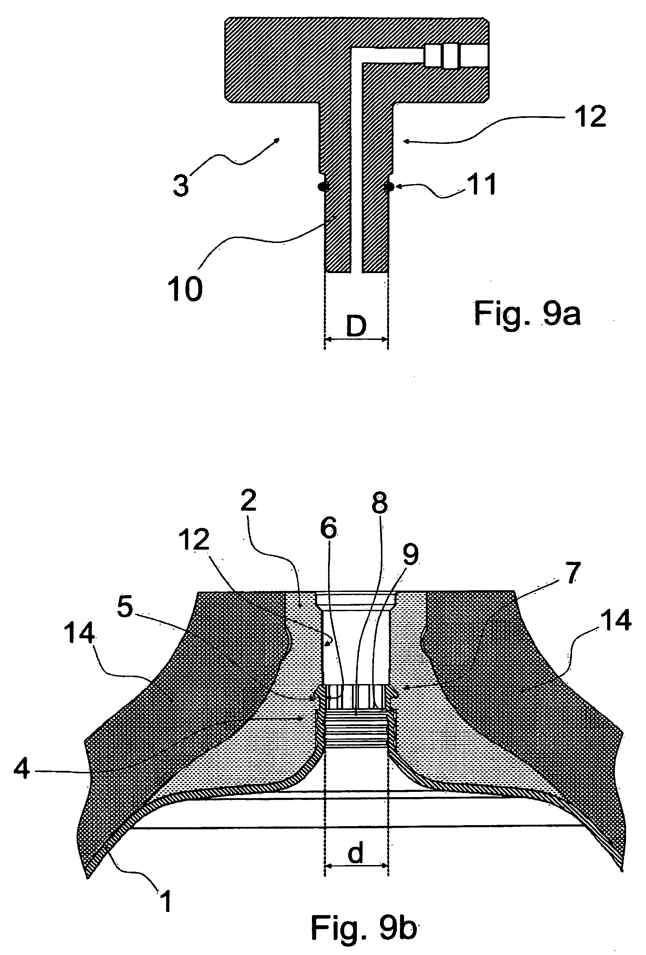

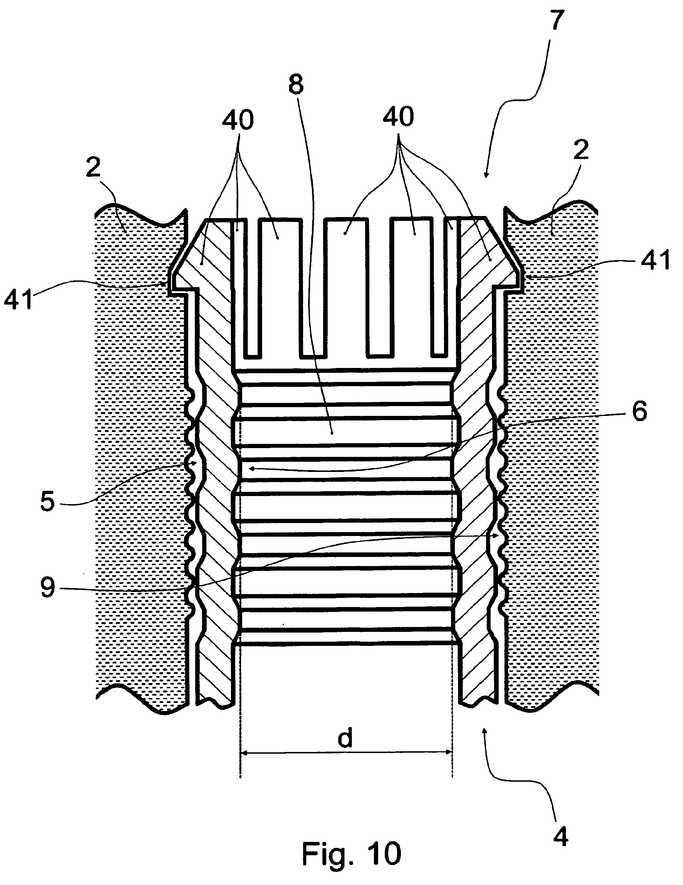

In den Fig. 9a, b und 10 sind axiale Längsschnitte durch eine weitere Ausführungsform einer erfindungsgemäßen Vorrichtung vor der Montage des Ventilelements 3 dargestellt. Ergänzend zu den bereits vorstehend beschriebenen Elementen weist der Kragen 4 mindestens eine definierte Unregelmäßigkeit auf, die als definierte Oberflächenunregelmäßigkeit ausgebildet ist. Diese definierte Oberflächenunregelmäßigkeit ist durch sich abwechselnde Ausformungen und Ausnehmungen auf oder in der Kragenaußenwandung 5 und Krageninnenwandung 6 gebildet. Die definierte Unregelmäßigkeit und / oder die definierte Oberflächenunregelmäßigkeit ist durch einen im Längsschnitt wellenförmigen Kragen 4 gebildet. Der Kragen 4 weist hierbei eine konstante Wandstärke auf. Wie in der vergrößerten Schnittdarstellung in Fig. 10 ersichtlich, weist auch die Innenwandung 9 des Ventilanschlusselements 2 eine definierte Oberflächenunregelmäßigkeit in Form von radial umlaufenden Rippen oder Ausformungen auf, welche sich ebenfalls wellenförmig entlang der Öffnung 8 erstrecken. Die Amplitude und/oder die Wellenlänge dieser Wellenform auf der Innenwandung 9 des Ventilanschlusselements 2 weist einen geringeren Wert auf als die Amplitude und/oder die Wellenlänge des wellenförmigen Kragens 4. Hierdurch ist gewährleistet, dass mindestens ein Wellenberg des wellenförmigen Kragens einem Wellenberg der radial umlaufenden Rippen oder Ausformungen gegenüberliegt. Vor der Ventilelementmontage ist der Durchmesser d der Krageninnenwandung 6 kleiner als der Außendurchmesser D des Verpressungsabschnitts 10. Zur Erzeugung eines dauerhaften Presssitzes ist selbstredend klar, dass der Durchmesser d der Krageninnenwandung 6 aus dem kleinsten Innendurchmesser d bestimmt wird.

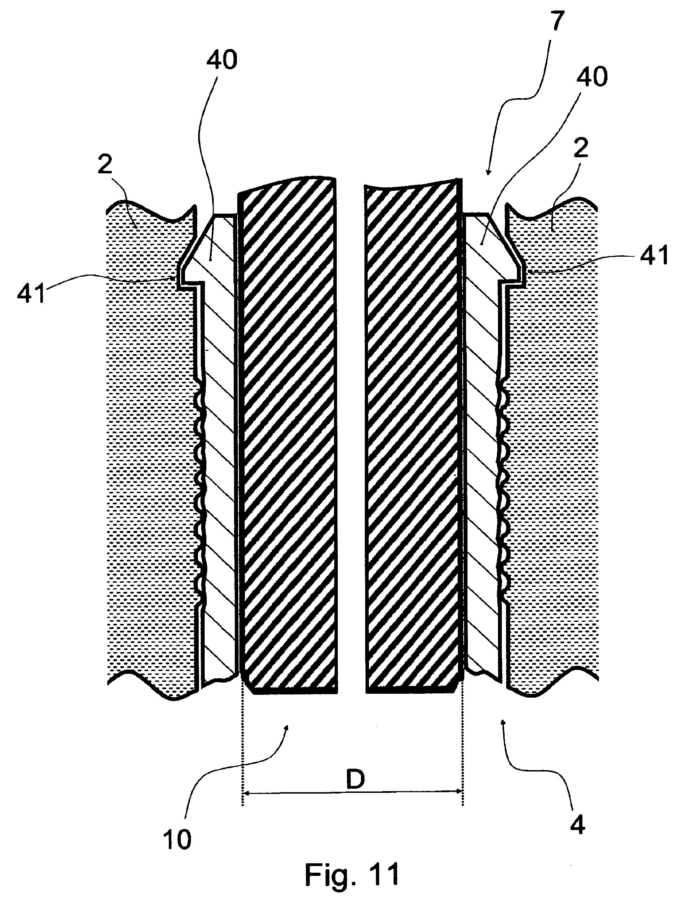

Die Fig. 11 zeigt einen axialen Längsschnitt durch die in den Figuren 9a, b und Fig. 10 dargestellte weitere Ausführungsform einer erfindungsgemäßen Vorrichtung, jedoch nach der Montage des Ventilanschlusselements 2. Hierzu ist oberhalb des Kragens 4 eine Verschraubung 12 zwischen dem Ventilelement 3 und dem Ventilanschlusselement 2 vorgesehen. Aufgrund des Übermaßes des Außendurchmessers D des Verpressungsabschnitts 10 vor der Ventilelementmontage im Vergleich zu dem Durchmesser d der Krageninnenwandung 6 wird diese Krageninnenwandung 6 weitgehend geglättet, so dass keine oder eine abgeflachte Wellenform im Längsschnitt entsteht. Gleichzeitig kommt es zu einer teilweisen Materialverdrängung in Montagerichtung des Ventilelements 3. Aufgrund der erfindungsgemäßen Verwendung eines vernetztem thermoplastischem Kunststoffes, vorzugsweise eines vernetztem Polyethylens für den Medienbehälter 1 - und folglich für den Kragen 4 - wird der vernetzte thermoplastische Kunststoff bei Temperaturwechseln, insbesondere bei Temperaturerhöhungen, bestrebt sein, die ursprüngliche Wellenform wieder einzunehmen, so dass bei einem Temperaturwechsel, insbesondere einem Temperaturanstieg ein selbstdichtender Effekt zwischen der Kragenaußenwandung 5 und der Innenwandung 9 des Ventilanschlusselements 2 entsteht. Dieser Effekt wird dadurch unterstützt, dass die Innenwandung 9 des Ventilanschlusselements 2 ebenfalls eine definierte Oberflächenunregelmäßigkeit in Form der Rippen oder Ausformungen aufweist, welche in einer Wellenform angeordnet sind. Der sich quasi an seine alte Form erinnernde vernetzte thermoplastische Kunststoff im Kragenbereich 4 zieht sich bei Temperaturwechseln, insbesondere bei Temperaturerhöhungen, selbstständig dichtend in die Zwischenräume zwischen den Rippen oder Ausformungen der Innenwandung 9 des Ventilanschlusselementes 2, so dass eine weiter verbesserte Dichtwirkung der erfindungsgemäßen Vorrichtung entsteht. Der Quotient (D-d) / d aus der Differenz (D-d) des Außendurchmessers D des Verpressungsabschnitts 10 und des Durchmessers d der Krageninnenwandung 6 in Bezug zu (=Division durch) dem Durchmesser d der Krageninnenwandung 6 liegt in einem Bereich zwischen 0,02 und 0,12, bevorzugt in einem Bereich zwischen 0,05 und 0,07.

Im Rahmen der Erfindung können auch die weiteren Ausführungsformen gemäß der Fig. 7 bis 11 ein mehrteilig aufgebautes Ventilelement 3 gemäß der Fig. 5 und 6 aufweisen.

## Patentansprüche

1. Vorrichtung zur Speicherung und Abgabe von flüssigen und/oder gasförmigen Medien unter Druck aufweisend:
- einen das Medium aufnehmenden Medienbehälter (1) aus einem vernetzen thermoplastischen Kunststoff, vorzugsweise aus vernetztem Polyethylen,
- mindestens ein mit dem Medienbehälter (1) verbundenes Ventilanschlusselement (2),
- mindestens ein mit dem Ventilanschlusselement (2) verbindbares Ventilelement (3, 3a, 3b),
wobei der Medienbehälter (1) einen nach außen vorstehenden Kragen (4) mit einer Kragenaußenwandung (5) und einer Krageninnenwandung (6) aufweist,
wobei das obere Ende (7) des Kragens (4) den freien Querschnitt einer Öffnung (8) des Medienbehälters (1) definiert,
wobei das Ventilanschlusselement (2) im Bereich dieser Öffnung (8) angeordnet und die Kragenaußenwandung (5) von einer Innenwandung (9) des Ventilanschlusselementes (2) umschlossen ist, und
wobei das Ventilelement (3, 3a) einen Verpressungsabschnitt (10) aufweist, der die Öffnung (8) durchdringt und von der Krageninnenwandung (6) umschlossen ist, und
wobei der Außendurchmesser (D) des Verpressungsabschnitts (10) vor der Ventilelementmontage größer als der Durchmesser (d) der Krageninnenwandung (6) ist,
so dass bei der Montage des Ventilelements (3) sowohl zwischen dem Verpressungsabschnitt (10) und der Krageninnenwandung (6) als auch zwischen der Kragenaußenwandung (5) und der Innenwandung (9) des Ventilanschlusselement (2) ein dauerhafter Presssitz entsteht, der das unter Druck stehende Medium abdichtet.

2. Vorrichtung nach Anspruch 1, **dadurch gekennzeichnet, dass** an der Kragenaußenwandung (5), vorzugsweise im Bereich des oberen Endes (7), mindestens ein Rastelement (40) angeordnet ist, das mit einem an der Innenwandung (9) des Ventilanschlusselements (2) ausgebildeten Rastgegenelement (41) derart zusammenwirkt, dass bei der Montage des Ventilelements (3, 3a) eine Verschiebung des Kragens (4) relativ zu dem Ventilanschlusselement (2) behindert ist.

3. Vorrichtung nach einem der Ansprüche 1 oder 2, **dadurch gekennzeichnet, dass** der Kragen mindestens eine definierte Unregelmäßigkeit aufweist, insbesondere eine definierte Oberflächenunregelmäßigkeit.

4. Vorrichtung nach Anspruch 3, **dadurch gekennzeichnet, dass** die definierte Oberflächenunregelmäßigkeit durch Ausformungen oder Ausnehmungen auf oder in der Kragenaußenwandung und/oder Krageninnenwandung gebildet ist.

5. Vorrichtung nach Anspruch 3 oder 4, **dadurch gekennzeichnet, dass** die definierte Unregelmäßigkeit und/oder die definierte Oberflächenunregelmäßigkeit durch einen im Längsschnitt wellenförmigen Kragen gebildet ist, wobei der Kragen vorzugsweise eine konstante Wandstärke aufweist.

6. Vorrichtung nach einem der vorstehenden Ansprüche, **dadurch gekennzeichnet, dass** das Ventilelement (3) mehrteilig aufgebaut ist, wobei der Verpressungsabschnitt (10) an einem separaten, hülsenförmigen ersten Segment (3a) des Ventilelements (3) angeordnet ist.

7. Vorrichtung nach einem der vorstehenden Ansprüche, **dadurch gekennzeichnet, dass** oberhalb des Kragens (4) ein Dichtungselement (11), vorzugsweise ein O-Ring (11) vorgesehen ist, welches das Ventilanschlusselement (2) gegen das Ventilelement (3) abdichtet.

8. Vorrichtung nach Anspruch 6 und 7, **dadurch gekennzeichnet, dass** das Dichtungselement (11) an einem separaten zweiten Segment (3b) des Ventilelements (3) angeordnet ist.

9. Vorrichtung nach einem der vorstehenden Ansprüche, **dadurch gekennzeichnet, dass** der Quotient aus der Differenz (D-d) des Außendurchmessers (D) des Verpressungsabschnitts (10) und des Durchmessers (d) der Krageninnenwandung (6) im Bezug zu dem Durchmesser (d) der Krageninnenwandung (6) in einem Bereich zwischen 0,001 und 0,2, vorzugsweise zwischen 0,01 und 0,15, weiter vorzugsweise zwischen 0,02 und 0,1, weiter vorzugsweise zwischen 0,04 und 0,08, weiter vorzugsweise zwischen 0,05 und 0,07 liegt.

10. Vorrichtung nach einem der vorstehenden Ansprüche, **dadurch gekennzeichnet, dass** im Bereich des Verpressungsabschnitts (10) und/oder der Kragenaußenwandung (5) kein separates Dichtungselement vorgesehen ist.

11. Vorrichtung nach einem der vorstehenden Ansprüche, **dadurch gekennzeichnet, dass** der Verpressungsabschnitt (10) eine zylindrische oder kegelstumpfförmige Geometrie aufweist.

12. Vorrichtung nach einem der vorstehenden Ansprüche, **dadurch gekennzeichnet, dass** oberhalb des Kragens (4) eine Verschraubung (12) zwischen dem Ventilelement (3) und dem Ventilanschlusselement (2) vorgesehen ist.

13. Vorrichtung nach einem der vorstehenden Ansprüche, **dadurch gekennzeichnet, dass** die Innenwandung (9) des Ventilanschlusselementes (2) mindestens eine definierte Unregelmäßigkeit aufweist.

14. Vorrichtung nach einem der vorstehenden Ansprüche, **dadurch gekennzeichnet, dass** der Medienbehälter (1) außerhalb des Bereichs des Kragens (4) mit dem Ventilanschlusselement (2) fest verbunden ist.

15. Vorrichtung nach einem der vorstehenden Ansprüche, **dadurch gekennzeichnet, dass** der Medienbehälter (1) von einer, vorzugsweise gewickelten oder geflochtenen, Armierungsschicht (14) umgeben ist.

16. Kraftstoffenergieumwandlungsvorrichtung mit
- einer Brennstoffzelleneinheit (15),
- mindestens einer Medien-Verbindungsleitung (16),
- mindestens einem Druckminderer (17) und
- mindestens einer Vorrichtung (18) nach einem der vorstehenden Ansprüche 1 bis 18,
wobei die Medien-Verbindungsleitung (16) die Vorrichtung (18) mit der Brennstoffzelleneinheit (15) medienleitend verbindet und der Druckminderer (17) in Medienflussrichtung vor der Brennstoffzelleneinheit (15) angeordnet ist.

17. Kraftfahrzeug mit einer Vorrichtung nach einem der vorstehenden Ansprüche 1 bis 15 oder mit einer Kraftstoffenergieumwandlungsvorrichtung nach Anspruch 16.

18. Verfahren zur Montage einer Vorrichtung zur Speicherung und Abgabe von flüssigen und/oder gasförmigen Medien unter Druck wobei die Vorrichtung folgendes aufweist:
- einen das Medium aufnehmenden Medienbehälter (1) aus einem vernetzen thermoplastischen Kunststoff, vorzugsweise aus vernetztem Polyethylen,
- mindestens ein Ventilanschlusselement (2),
- mindestens ein mit dem Ventilanschlusselement (2) verbindbares Ventilelement (3),
wobei der Medienbehälter (1) einen nach außen vorstehenden Kragen (4) mit einer Kragenaußenwandung (5) und einer Krageninnenwandung (6) aufweist und das obere Ende (7) des Kragens (4) den freien Querschnitt einer Öffnung (8) des Medienbehälters (1) definiert,
wobei das Ventilanschlusselement (2) im Bereich dieser Öffnung (8) angeordnet und die Kragenaußenwandung (5) dabei von einer Innenwandung (9) des Ventilanschlusselementes (2) umschlossen wird, und
wobei das Ventilelement (3) einen Verpressungsabschnitt (10) aufweist, der die Öffnung (8) durchdringt und von der Krageninnenwandung (6) umschlossen ist, und
wobei der Verpressungsabschnitt (10) aufgrund eines Übermaßes in die Öffnung (8) eingepresst wird, so dass sowohl zwischen dem Verpressungsabschnitt (10) und der Krageninnenwandung (6) als auch zwischen der Kragenaußenwandung (5) und dem Ventilanschlusselement (2) ein dauerhafter Presssitz entsteht, der gegen das unter Druck stehende Medium abdichtet.

## Claims

1. Device for storing and dispensing pressurized liquid and/or gaseous media, having:
- a media container (1) which accommodates the medium and which is composed of a cross-linked thermoplastic material, preferably of cross-linked polyethylene,
- at least one valve attachment element (2) which is connected to the media container (1),
- at least one valve element (3, 3a, 3b) which can be connected to the valve attachment element (2),
wherein the media container (1) has an outwardly projecting collar (4) with a collar outer wall (5) and a collar inner wall (6),
wherein the upper end (7) of the collar (4) defines the free cross section of an opening (8) of the media container (1),
wherein the valve attachment element (2) is arranged in the region of said opening (8) and the collar outer wall (5) is surrounded by an inner wall (9) of the valve attachment element (2), and
wherein the valve element (3, 3a) has a pressing section (10) which extends through the opening (8) and which is surrounded by the collar inner wall (6), and
wherein, before the mounting of the valve element, the outer diameter (D) of the pressing section (10) is larger than the diameter (d) of the collar inner wall (6),
such that, during the mounting of the valve element (3), a permanent interference fit, which seals off the pressurized medium, is generated both between the pressing section (10) and the collar inner wall (6) and between the collar outer wall (5) and the inner wall (9) of the valve attachment element (2).

2. Device according to Claim 1, **characterized in that**, on the collar outer wall (5), preferably in the region of the upper end (7), there is arranged at least one detent element (40) which interacts with a counterpart detent element (41) formed on the inner wall (9) of the valve attachment element (2), said interaction being such that, during the mounting of the valve element (3, 3a), a displacement of the collar (4) relative to the valve attachment element (2) is impeded.

3. Device according to either of Claims 1 and 2, **characterized in that** the collar has at least one defined irregularity, in particular a defined surface irregularity.

4. Device according to Claim 3, **characterized in that** the defined surface irregularity is formed by protuberances or recesses on or in the collar outer wall and/or collar inner wall.

5. Device according to Claim 3 or 4, **characterized in that** the defined irregularity and/or the defined surface irregularity is formed by a collar which is of undulating form in longitudinal section, wherein the collar preferably has a constant wall thickness.

6. Device according to one of the preceding claims, **characterized in that** the valve element (3) is of multi-part construction, wherein the pressing section (10) is arranged on a separate, sleeve-shaped first segment (3a) of the valve element (3).

7. Device according to one of the preceding claims, **characterized in that**, above the collar (4), there is provided a seal element (11), preferably an O-ring (11), which seals off the valve attachment element (2) against the valve element (3).

8. Device according to Claims 6 and 7, **characterized in that** the seal element (11) is arranged on a separate second segment (3b) of the valve element (3).

9. Device according to one of the preceding claims, **characterized in that** the quotient of the difference (D-d) between the outer diameter (D) of the pressing section (10) and the diameter (d) of the collar inner wall (6) in relation to the diameter (d) of the collar inner wall (6) lies in a range between 0.001 and 0.2, preferably between 0.01 and 0.15, more preferably between 0.02 and 0.1, more preferably between 0.04 and 0.08, more preferably between 0.05 and 0.07.

10. Device according to one of the preceding claims, **characterized in that** no separate seal element is provided in the region of the pressing section (10) and/or of the collar outer wall (5).

11. Device according to one of the preceding claims, **characterized in that** the pressing section (10) has a cylindrical or frustoconical geometry.

12. Device according to one of the preceding claims, **characterized in that**, above the collar (4), there is provided a threaded connection (12) between the valve element (3) and the valve attachment element (2).

13. Device according to one of the preceding claims, **characterized in that** the inner wall (9) of the valve attachment element (2) has at least one defined irregularity.

14. Device according to one of the preceding claims, **characterized in that** the media container (1) is fixedly connected to the valve attachment element (2) outside the region of the collar (4).

15. Device according to one of the preceding claims, **characterized in that** the media container (1) is surrounded by a preferably wound or braided reinforcement layer (14).

16. Fuel energy conversion device, having
- a fuel cell unit (15),
- at least one media connecting line (16),
- at least one pressure reducer (17) and
- at least one device (18) according to one of the preceding Claims 1 to 18,
wherein the media connecting line (16) connects the device (18) to the fuel cell unit (15) in media-conducting fashion, and the pressure reducer (17) is arranged upstream of the fuel cell unit (15) as viewed in the media throughflow direction.

17. Motor vehicle having a device according to one of the preceding Claims 1 to 15 or having a fuel energy conversion device according to Claim 16.

18. Method for assembling a device for storing and dispensing pressurized liquid and/or gaseous media, wherein the device has the following:
- a media container (1) which accommodates the medium and which is composed of a cross-linked thermoplastic material, preferably of cross-linked polyethylene,
- at least one valve attachment element (2),
- at least one valve element (3) which can be connected to the valve attachment element (2),
wherein the media container (1) has an outwardly projecting collar (4) with a collar outer wall (5) and a collar inner wall (6), and the upper end (7) of the collar (4) defines the free cross section of an opening (8) of the media container (1),
wherein the valve attachment element (2) is arranged in the region of said opening (8) and, here, the collar outer wall (5) is surrounded by an inner wall (9) of the valve attachment element (2), and
wherein the valve element (3) has a pressing section (10) which extends through the opening (8) and which is surrounded by the collar inner wall (6), and
wherein the pressing section (10) is, owing to an oversize, pressed into the opening (8) such that a permanent interference fit, which seals off the pressurized medium, is generated both between the pressing section (10) and the collar inner wall (6) and between the collar outer wall (5) and the valve attachment element (2).

## Revendications

1. Ensemble d'accumulation et de distribution de fluides sous pression, liquides et/ou gazeux, présentant :
- un récipient (1) reprenant le fluide et constitué d'une matière synthétique thermoplastique réticulée, de préférence de polyéthylène réticulé,
- au moins un élément (2) de raccordement de soupape raccordé au récipient (1) à fluide,
- au moins un élément de soupape (3, 3a, 3b) apte à être relié à l'élément (2) de raccordement de soupape,
le récipient (1) à fluide présentant un collet (4) débordant vers l'extérieur et doté d'une paroi extérieure (5) de collet et d'une paroi intérieure (6) de collet,
l'extrémité supérieure (7) du collet (4) définissant la section transversale libre d'une ouverture (8) du récipient (1) à fluide,
l'élément (2) de raccordement de soupape étant disposé au niveau de cette ouverture (8) et la paroi extérieure (5) du collet étant entourée par une paroi intérieure (9) de l'élément (2) de raccordement de soupape,
l'élément de soupape (3, 3a) présentant une section de compression (10) qui traverse l'ouverture (8) et est entourée par la paroi intérieure (6) du collet, et
le diamètre extérieur (D) de la section de compression (10) étant supérieur au diamètre (d) de la paroi intérieure (6) du collet avant le montage de l'élément de soupape,
de telle sorte que lors du montage de l'élément de soupape (3), on obtienne un ajustement serré de manière durable, étanche vis-à-vis du fluide sous pression à la fois entre la section de compression (10) et la paroi intérieure (6) du collet et entre la paroi extérieure (5) du collet et la paroi intérieure (9) de l'élément (2) de raccordement de soupape.

2. Ensemble selon la revendication 1, **caractérisé en ce qu'**au moins un élément d'encliquetage (40) qui coopère avec un élément complémentaire d'encliquetage (41) formé sur la paroi intérieure (9) de l'élément (2) de raccordement de soupape est disposé sur la paroi extérieure (5) du collet, de préférence au niveau de son extrémité supérieure (7), de telle sorte que lors du montage de l'élément de soupape (3, 3a), le collet (4) ne puisse glisser par rapport à l'élément (2) de raccordement de soupape.

3. Ensemble selon l'une des revendications 1 ou 2, **caractérisé en ce que** le collet présente au moins une irrégularité définie et en particulier une irrégularité de surface définie.

4. Ensemble selon la revendication 3, **caractérisé en ce que** l'irrégularité de surface définie est formée par des déformations ou des découpes réalisées sur la paroi extérieure du collet et/ou sur la paroi intérieure du collet.

5. Ensemble selon les revendications 3 ou 4, **caractérisé en ce que** l'irrégularité définie et/ou l'irrégularité de surface définie sont formées par un collet ondulé dans le sens de sa longueur, le collet présentant de préférence une paroi d'épaisseur constante.

6. Ensemble selon l'une des revendications précédentes, **caractérisé en ce que** l'élément de soupape (3) est réalisé en plusieurs pièces, la section de compression (10) étant disposée sur un premier segment (3a) séparé, en forme de manchon, de l'élément de soupape (3).

7. Ensemble selon l'une des revendications précédentes, **caractérisé en ce qu'**au-dessus du collet (4) est prévu un élément d'étanchéité (11), de préférence un joint torique (11), qui assure l'étanchéité de l'élément (2) de raccordement de soupape vis-à-vis de l'élément de soupape (3).

8. Ensemble selon les revendications 6 et 7, **caractérisé en ce que** l'élément d'étanchéité (11) est disposé sur un deuxième segment (3b), séparé, de l'élément de soupape (3).

9. Ensemble selon l'une des revendications précédentes, **caractérisé en ce que** le quotient de la différence (D-d) entre le diamètre extérieur (D) de la section de compression (10) et le diamètre (d) de la paroi intérieure (6) du collet et le diamètre (d) de la paroi intérieure (6) du collet est compris entre 0,001 et 0,2, de préférence entre 0,01 et 0,15, de façon encore plus préférable entre 0,02 et 0,1, de façon encore plus préférable entre 0,04 et 0,08 et de façon encore plus préférable entre 0,05 et 0,07.

10. Ensemble selon l'une des revendications précédentes, **caractérisé en ce qu'**aucun élément d'étanchéité distinct n'est prévu au niveau de la section de compression (10) et/ou de la paroi extérieure (5) du collet.

11. Ensemble selon l'une des revendications précédentes, **caractérisé en ce que** la section de compression (10) présente une géométrie cylindrique ou tronconique.

12. Ensemble selon l'une des revendications précédentes, **caractérisé en ce qu'**au-dessus du collet (4), un filet (12) est prévu entre l'élément de soupape (3) et l'élément (2) de raccordement de soupape.

13. Ensemble selon l'une des revendications précédentes, **caractérisé en ce que** la paroi intérieure (9) de l'élément (2) de raccordement de soupape présente au moins une irrégularité définie.

14. Ensemble selon l'une des revendications précédentes, **caractérisé en ce que** le récipient (1) à fluide est raccordé solidairement à l'élément (2) de raccordement de soupape à l'extérieur de la zone occupée par le collet (4).

15. Ensemble selon l'une des revendications précédentes, **caractérisé en ce que** le récipient (1) à fluide est entouré par une couche d'armature (14), de préférence enroulée ou floquée.

16. Ensemble de conversion énergétique d'un combustible présentant
- une unité (15) à cellule à combustible,
- au moins un conduit (16) de raccordement de fluide,
- au moins un réducteur de pression (17) et
- au moins un ensemble (18) selon l'une des revendications 1 à 18 qui précèdent,
le conduit (16) de raccordement de fluide reliant hydrauliquement l'ensemble (18) à l'unité (15) de cellule à combustible et le réducteur de pression (17) étant disposé en amont de l'unité (15) de cellule à combustible dans la direction d'écoulement du fluide.

17. Véhicule automobile doté d'un ensemble selon l'une des revendications 1 à 15 ou d'un ensemble de conversion énergétique d'un combustible selon la revendication 16.

18. Procédé de montage d'un dispositif d'accumulation et de distribution de fluides sous pression, liquides et/ou gazeux, l'ensemble présentant :
- un récipient (1) reprenant le fluide, en matière synthétique thermoplastique réticulée, de préférence en polyéthylène réticulé,
- au moins un élément (2) de raccordement de soupape,
- au moins un élément de soupape (3) apte à être relié à l'élément (2) de raccordement de soupape,
le récipient (1) à fluide présentant un collet (4) débordant vers l'extérieur et doté d'une paroi extérieure (5) de collet et d'une paroi intérieure (6) de collet, et l'extrémité supérieure (7) du collet (4) définissant la section transversale libre d'une ouverture (8) du récipient (1) à fluide,
l'élément (2) de raccordement de soupape étant disposé au niveau de cette ouverture (8) et la paroi extérieure (5) du collet étant entourée par une paroi intérieure (9) de l'élément (2) de raccordement de soupape,
l'élément de soupape (3) présentant une section de compression (10) qui traverse l'ouverture (8) et est entourée par la paroi intérieure (6) du collet,
la section de compression (10) étant comprimée dans l'ouverture (8) du fait de sa dimension supérieure, de telle sorte que l'on obtienne un ajustement serré de manière durable, étanche vis-à-vis du fluide sous pression à la fois entre la section de compression (10) et la paroi intérieure (6) du collet et entre la paroi extérieure (5) du collet et l'élément (2) de raccordement de soupape.
